# EUROPEAN PATENT SPECIFICATION

(11) **EP 2 305 000 B1**
(45) Date of publication and mention of the grant of the patent: **12.08.2015**
(21) Application number: 09765869.4
(22) Date of filing: 17.06.2009
(51) Int. Cl.: H04W 84/04

(54) **METHOD AND APPARATUS FOR ESTABLISHING A CONNECTION TO AT LEAST ONE NEIGHBOURING NETWORK ELEMENT IN A CELLULAR COMMUNICATIONS NETWORK**
VERFAHREN UND VORRICHTUNG FÜR DIE HERSTELLUNG EINER VERBINDUNG ZU MINDESTENS EINEM BENACHBARTEN ZUGANGSPUNKT IN EINEM ZELLULAREN KOMMUNIKATIONSNETZ
PROCÉDÉ ET APPAREIL POUR ÉTABLISSEMENT D'UNE CONNEXION VERS AU MOINS UN ÉLÉMENT DE POINT D'ACCÈS DANS UN RÉSEAU DE COMMUNICATIONS CELLULAIRES

(30) Priority: 17.06.2008 GB 0811032
(43) Date of publication of application: 06.04.2011
(73) Proprietor: I.P.Access Limited, Cambridgeshire CB23 6DW (GB)
(72) Inventor: NEIL, David, Cambridge Cambridgeshire CB4 3QH (GB)
(74) Representative: Wray, Antony John
(86) International application number: PCT/EP2009/057541
(87) International publication number: WO 2009/153289

(56) References cited:
- EP-A2- 1 915 005
- US-A1- 2005 237 963
- US-A1- 2007 097 939
- US-A1- 2007 097 983
- US-A1- 2007 254 620

## Description

### Field of the invention

The field of the invention relates to a method and apparatus for establishing a connection with at least one neighbouring network element.

### Background of the Invention

Wireless communication systems, such as the 3^{rd} Generation (3G) of mobile telephone standards and technology, are well known. An example of such 3G standards and technology is the Universal Mobile Telecommunications System (UMTS), developed by the 3rd Generation Partnership Project (3GPP) (www.3gpp.org).

Typically, wireless communication units, or User Equipment (UE) as they are often referred to in 3G parlance, communicate with a Core Network (CN) of the 3G wireless communication system via a Radio Network Subsystem (RNS). A wireless communication system typically comprises a plurality of radio network subsystems, each radio network subsystem comprising one or more cells to which UEs may attach, and thereby connect to the network.

The 3^{rd} generation of wireless communications has been developed for macro-cell mobile phone communications. Such macro cells utilise high power base stations (referred to as NodeBs in 3GPP parlance) to communicate with UEs within a relatively large coverage area.

Lower power (and therefore smaller coverage area) femto cells or pico-cells are a recent development within the field of wireless cellular communication systems. Femto cells or pico-cells (with the term femto cells being used hereafter to encompass pico-cells or similar) are effectively communication coverage areas supported by low power base stations (otherwise referred to as Access Points (APs)). These femto cells are intended to be able to be piggy-backed onto the more widely used macro-cellular network and thereby support communications to UEs in a restricted, for example 'in-building', environment.

In this regard, a femto cell that is intended to support communications according to the 3GPP standard will hereinafter be referred to as a 3G femto cell. Similarly, an access controller intended to support communications with a low power base station in a femto cell according to the 3GPP standard will hereinafter be referred to as a 3^{rd} generation access controller (3G AC). Similarly, an Access Point intended to support communications in a femto cell according to the 3GPP standard will hereinafter be referred to as a 3^{rd} Generation Access Point (3G AP).

Typical applications for such femto cell APs include, by way of example, residential and commercial (e.g. office) locations, 'hotspots', etc, whereby an AP can be connected to a core network via, for example, the Internet using a broadband connection or the like. In this manner, femto cells can be provided in a simple, scalable deployment in specific in-building locations where, for example, network congestion at the macro-cell level may be problematic.

In a femto cell network, it is often desirable for a femto cell AP to be able to impart information to, or otherwise communicate with, neighbouring APs, for example in order to facilitate the handover of UEs between APs, to coordinate auto configuration algorithms in order to avoid positive feedback loops, etc. Additionally, communication between APs further enables the establishment of connections for the purpose of media routing between APs, and to enable coordination of neighbour cell lists, etc.

The ability for femto cell APs to communicate between themselves may further be used to receive a wide variety of information from neighbouring cells, thereby enabling such opportunities as validating a location of an AP, by way of monitoring location information (e.g. longitude and latitude information) received from neighbouring cells, identifying neighbouring cells within a common cluster or group of cells based on, say, group ID information received from neighbouring cells, interference minimisation by way of receiving common pilot channel (CPICH) power selection algorithm information from neighbouring cells, etc.

Currently, although no specific standard technique for providing a mechanism for enabling femto cells to communicate with each other has been defined, work in this area to date has assumed that such inter-AP communication will be provided over a backhaul connection. However, at present, no specific approach has been considered for providing such communication.

One option considered for establishing a connection between femto cell APs within a common Network Operator domain comprises configuring each AP with the necessary information for establishing a connection with other APs in its vicinity. However, this assumes that the Network Operator knows the geographical location of the APs within its domain, and thus is able to configure each AP with the necessary information for communicating with those APs in its vicinity.

For macro-cellular parts of a network, determining the location of a cell is typically not required, since the Network Operator is responsible for the installation of the various base stations, and planning the locations of the macro-cells, prior to the system going 'live'. However, it is often the case that femto cells are not planned, or indeed installed, by the Network Operator. Consequently, although the owner of the femto cell may know the precise location of the femto cell, it is regularly the case that the Network Operator is unaware of the specific location of the femto cell. Hence, it is unrealistic to depend on the Network Operator to be able to reliably configure each AP with the necessary information for establishing a connection with other APs in its vicinity. Furthermore, such a solution requires an Operator controlled central configuration database, and does not address cross operator domain communication for APs. US 2007/097983 A1, US 2007/097939, US 2005/237963 and US 2007/254620 each describe cellular communication systems in a related field.Thus, there exists a need for an apparatus and a method for imparting information to at least one neighbouring network element, for example a femto cell AP, in a cellular communication network.

### Summary of the Invention

Accordingly, the invention seeks to mitigate, alleviate or eliminate one or more of the abovementioned disadvantages singly or in any combination.

According to the invention, there is provided a cellular communication network, a method of establishing communication between first and second access points of the network, and a computer-readable storage element having computer-readable code stored thereon for programming signal processing logic to perform the method, all as described in the accompanying claims.

These and other aspects, features and advantages of the invention will be apparent from, and elucidated with reference to, the embodiment(s) described hereinafter.

### Brief Description of the Drawings

Embodiments of the invention will be described, by way of example only, with reference to the accompanying drawings, in which:
FIG. 1 illustrates an example of part of a cellular communication network adapted in accordance with an embodiment of the invention.
FIG. 2 illustrates an example of a simplified flowchart of a method for imparting information to at least one neighbouring network element within a cellular communication network adapted in accordance with an embodiment of the invention.
FIG. 3 illustrates an example of a simplified flowchart of a method for receiving information from at least one neighbouring network element within a cellular communication network adapted in accordance with an embodiment of the invention.
FIG. 4 illustrates a typical computing system that may be employed to implement signal processing functionality in embodiments of the invention.

### Detailed Description of Embodiments of the Invention

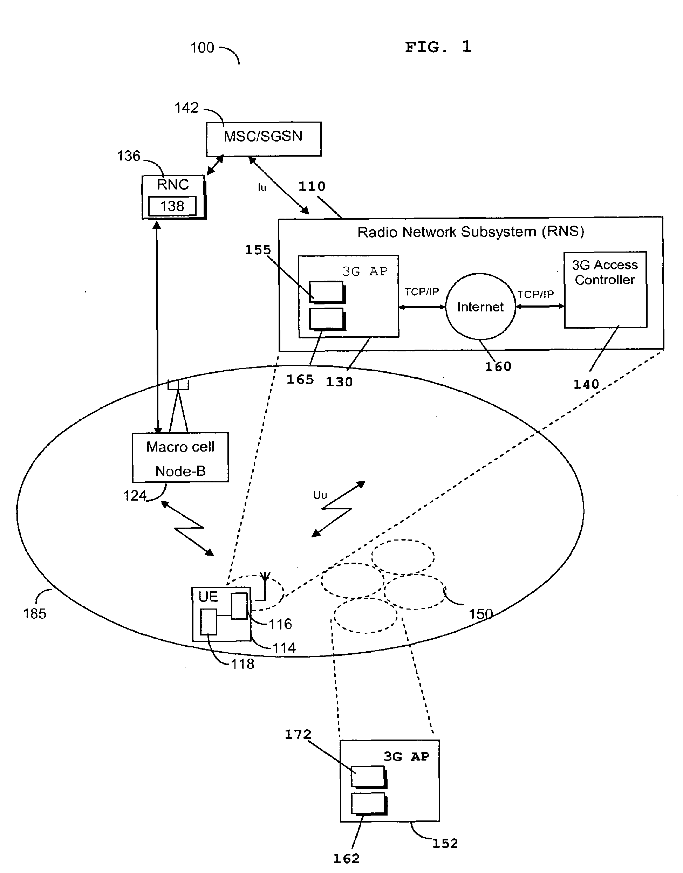

Referring now to the drawings, and in particular FIG. 1, an example of part of a 3GPP network, adapted in accordance with an embodiment of the invention, is illustrated and indicated generally at 100. In FIG. 1, there is illustrated an example of a communication system 100 that comprises a combination of a macro cell 185 and a plurality of 3G femto cells 150 in accordance with one embodiment of the invention. For the embodiment illustrated in FIG. 1, the radio network sub-system (RNS) comprises two distinct architectures to handle the respective macro cell and femto cell communications. In the macro cell scenario, the RNS comprises an RNC 136 having, inter alia, signal processing logic 138. The RNC 136 is operably coupled to a Node B 124 for supporting communications within the macro cell 185. The RNC 136 is further operably coupled to a network element 142, such as a serving (General Packet Radio System) GPRS support node (SGSN)/mobile switching centre (MSC), as known.

In a femto cell scenario, an RNS 110 comprises a network element, in a form of an 3G Access Point (3G AP) 130, arranged to perform a number of functions generally associated with a base station, and a controller in a form of a 3G Access controller (3G AC) 140. As will be appreciated by a skilled artisan, a 3G Access Point is a communication element that provides access to a cellular communication network via a communication cell, such as a 3G femto cell 150. One envisaged application is that a 3G AP 130 may be purchased by a member of the public and installed in their home. The 3G AP 130 may then be connected to a 3G AC 140 over the owner's broadband internet connection 160.

Thus, a 3G AP 130 may be considered as encompassing a scalable, multi-channel, two-way communication device that may be provided within, say, residential and commercial (e.g. office) locations, 'hotspots' etc, to extend or improve upon network coverage within those locations. Although there are no standard criteria for the functional components of a 3G AP, an example of a typical 3G AP for use within a 3GPP system may comprise some Node-B functionality and some aspects of radio network controller (RNC) 136 functionality. The 3G AP 130 further comprises transceiver circuitry 155 arranged to enable communication with one or more wireless communication units located within the general vicinity of the communication cell, and in particular within the communication cell 150, such as User Equipment (UE) 114, via a wireless interface (Uu).

The 3G Access Controller 140 may be coupled to the core network (CN) 142 via an lu interface, as shown. In this manner, the 3G AP 130 is able to provide voice and data services to a cellular handset, such as UE 114, in a femto cell in contrast to the macro cell, in the same way as a conventional Node-B, but with the deployment simplicity of, for example, a Wireless Local Area Network (WLAN) access point.

The UE 114 is a wireless communication unit comprising a transceiver 116 arranged to transmit and receive signals, and signal processing logic 118. As would be appreciated by a skilled person, UE 114 comprises numerous other functional and logical elements to support wireless communications and functionality and which will not be described further herein.

As previously mentioned, it is often desirable for network elements such as femto cell APs to be able to communicate with one another, facilitating the handover of UEs between femto APs, to coordinate auto configuration algorithms in order to avoid positive feedback loops, etc. Additionally, communication between APs further enables the establishment of connections for the purpose of media routing between APs, and to enable coordination of neighbour cell lists, etc.

In accordance with some embodiments of the invention, the 3G AP 130 comprises signal processing logic 165 arranged to generate a message comprising information intended for receipt by at least one neighbouring network element, such as neighbouring 3G AP 152, and to broadcast the message via the transceiver circuitry 155.

In this manner, the 3G AP 130 is able to communicate directly with neighbouring 3G APs. In particular, the 3G AP 130 is able to provide information to neighbouring network elements without the need for pre-configuration of information for establishing a connection with the, or each, neighbouring network element, for example via the network infrastructure. Furthermore, the 3G AP 130 is able to provide information to neighbouring network elements irrespective of whether or not the, or each, neighbouring network element is within the same operator domain. Additionally, there is no requirement for a Network Operator controlled central configuration database, nor standardisation of a management system across multiple Network Operators.

In accordance with a second aspect of the invention, network element 152 comprises transceiver circuitry 172 arranged to enable communication with one or more wireless communication units located within the general vicinity of a communication cell 150 supported by the network element 152. The network element 152 further comprises signal processing logic 162 arranged to receive via the transceiver circuitry 172 broadcast messages from neighbouring network elements, such as AP 130, where the broadcast messages comprising information intended for receipt by at least one neighbouring network element.

In accordance with some embodiments of the invention, the broadcast information intended for receipt by at least one neighbouring network element may comprise information enabling the at least one neighbouring network element to establish a connection with the broadcasting network element. For example, for the illustrated embodiment, the information may enable neighbouring network element 152 to establish a connection with 3G AP 130 via, say, the Internet. Accordingly, the broadcast information intended for receipt by the at least one neighbouring network element may comprise information such as one or more of:
(i) An IP (Internet Protocol) address for a controller of the broadcasting network element; and
(ii) A FQDN (Fully Qualified Domain Name).

Accordingly, for some embodiments of the invention, the signal processing logic 162 of network element 152 is arranged to receive the broadcast message from at least one neighbouring network element, extract information from the received broadcast message and to establish a connection, for example via the Internet, using the extracted information, with the at least one neighbouring network element from which the broadcast message was received.

In this manner, by directly enabling neighbouring network elements to establish connections with each other via, for example, the Internet, the network elements are provided with a mechanism for exchanging information without the need for pre-configuration of information for establishing a connection with the, or each, neighbouring network element. Furthermore, the network element may be able to provide information to neighbouring network elements of neighbouring communication cells, irrespective of whether or not the, or each, neighbouring network element may be within the same operator domain. Such information may comprise, by way of example only:
(i) information relating to current power levels and interference used and experienced by the network elements;
(ii) information relating to power control/ selection algorithms being used by the network elements;
(iii) information relating to access control for the network elements (e.g. a list of wireless communication devices authorised to access a network via a particular network element);
(iv) information enabling the handover of wireless communication devices between network elements;
(v) media content (e.g. audio or video media content);
(vi) information relating to neighbour cell lists;
(vii) information relating to geographical location;
(viii) information allowing a cluster of adjacent cells to form a group of cells; etc.

Additionally, or alternatively, the broadcast information intended for receipt by neighbouring network elements may comprise information facilitating interference minimisation. Furthermore, the signal processing logic may further be arranged to receive a broadcast message from one or more neighbouring network elements, extract information from the received broadcast message(s) and to configure power settings to substantially compliment those of the one or more neighbouring network elements from which the broadcast message(s) was/were received, based on the extracted information.

For example, the broadcast information may comprise information identifying a CPICH (Common Pilot CHannel) power selection/control algorithm used by the network element, current power levels for the communication cell of the network element, and/or interference experienced by the network element. In this manner, a network element receiving such information is able to configure its own CPICH power selection/control algorithm and set power levels to substantially avoid positive feedback loops in the algorithms, and thus to minimise the interference with its neighbour.

In accordance with some embodiments of the invention, the broadcast information intended for receipt by at least one neighbouring network element may comprise information relating to the geographical location of the broadcasting network element. Additionally, the signal processing logic 162 of the network element 152 may be further arranged to receive a broadcasting message from one or more neighbouring network elements, extract information from the received broadcast message(s) and to determine or validate its at least approximate geographical location based on the extracted information. For example, the broadcast information may comprise information relating to longitudinal and/or latitudinal coordinates for the broadcasting network element. In this manner, a network element, such as network element 152, may be able to use location information broadcast by neighbouring network elements to determine, or validate, an at least approximate location of itself.

In accordance with some further embodiments of the invention, the broadcast information intended for receipt by at least one neighbouring network element may comprise information allowing a cluster of adjacent cells to form a group, such as a cell group identifier of the broadcasting network element. Additionally, the signal processing logic 162 may be further arranged to receive a broadcast message from at least one neighbouring network element, extract information from the received broadcast message and to determine whether the at least one neighbouring network element from which the broadcast message was received is a member of the same group or cluster as itself. In this manner, a network element, such as network element 152, may determine whether neighbouring network elements are members of the same group as itself. As a result, those neighbouring network elements that are members of the same group may share group related information, such as access control lists, neighbour lists, etc. In this manner, the setting up and configuring of a set of related access points may be greatly facilitated, for example within a large house or office.

In accordance with still further alternative embodiments, the broadcast information may comprise a code, for example received from a controller within the cellular communication network, such as MSC 142. Additionally, the signal processing logic 162 of network element 152 may be further arranged, upon receipt of a request from a controller within the cellular communication network, such as MSC 142, to receive a broadcast message from one or more neighbouring network elements, extract a code from the received broadcast message(s), and to communicate the extracted code(s) back to the controller. In this manner, the controller may confirm whether the receiving network element is within the coverage area of the transmitting (broadcasting) cell(s) based on whether the receiving network element returns the appropriate code(s).

In accordance with some yet further alternative embodiments of the invention, the broadcast information may comprise information relating to access control for the broadcasting network element. Additionally, the signal processing logic 162 of network element 152 may be further arranged to receive a broadcast message from one or more neighbouring network elements, extract information relating to access control from the received broadcast message(s) and to restrict the handover of wireless communication devices to the one or more neighbouring network elements in accordance with the extracted information. In this manner, the signal processing logic of the receiving network element may be arranged to only handover wireless communication devices to the broadcasting network element if the wireless communication devices would be accepted according to the access control information that was broadcast.

In accordance with some embodiments of the invention, the broadcast information intended for receipt by at least one neighbouring network element may be broadcast within a system information message. For example, a UMTS network utilises a Radio Resource Control (RRC) protocol. The RRC protocol is defined in the Universal Mobile Telecommunications System (UMTS) Radio Resource Control (RRC) Protocol specification (3GPP TS 25.331), and forms part of the network layer between the UE and the UMTS Terrestrial Radio Access Network (UTRAN). The RRC protocol comprises connection management procedures, which, in turn, comprise the broadcasting of system information by the UTRAN. Typically, System Information messages contain information that is common to all of the UEs in the cell. However, in accordance with some embodiments of the invention, it is contemplated that System Information messages may be adapted to contain information intended for receipt by at least one neighbouring network element, such as a 3G AP.

More particularly, system information elements are broadcast in system information blocks, which group together system information elements of the same nature. A generic 'SYSTEM INFORMATION' message is used to convey the system information blocks on a BCCH (Broadcast Control CHannel) logical channel, which, in turn, may be mapped onto either a BCH (Broadcast CHannel) or FACH (Forward Access CHannel) transport channel. The size of the SYSTEM INFORMATION message is configured to fit the size of a BCH or FACH transport block, as required.

The RRC layer in the UTRAN performs segmentation and concatenation of encoded system information blocks. If the encoded system information block is larger than the size of a SYSTEM INFORMATION message, it is segmented and transmitted in several messages. If the encoded system information block is smaller than a SYSTEM INFORMATION message, several system information blocks may be concatenated into the same SYSTEM INFORMATION message.

Thus, and in accordance with some embodiments of the invention, the signal processing logic 165 of 3G AP 130 may be arranged to construct a system information block comprising the information intended for receipt by at least one neighbouring network element, the information intended for receipt by at least one neighbouring network element being located within an information element of the system information block. The system information block may then be broadcast within one or more system information messages, on a BCCH (broadcast control channel) logical channel. The system information block may then be broadcast.

As will be appreciated by a skilled artisan, by broadcasting the information intended for receipt by at least one neighbouring network element within an RRC system information message, only slight modifications are required to be made to network elements in order to implement embodiments of the invention.

In accordance with some alternative embodiments of the invention, the broadcast information intended for receipt by at least one neighbouring network element may be broadcast within a Broadcast/Multicast Control (BMC) message, such as a Cell Broadcast Service (CBS) message, defined in the Broadcast/Multicast Control (BMC) Technical Specification (3GPP TS 25.324). For example, within the current 3GPP standards, CBS messages carry cell broadcast data etc. from a Cell Broadcast Centre to a UE. In particular, CBS messages are broadcast within a Common Traffic CHannel (CTCH), a CTCH block set forming a subset of the transport block set of the Forward Access Channel (FACH). Typically, BMC messages contain information that is common to all of the UEs in the cell. However, in accordance with some embodiments of the invention, it is contemplated that BMC, or CBS, messages may be adapted to contain information intended for receipt by at least one neighbouring network element, such as a 3G AP.

Thus, and in accordance with some embodiments of the invention, the signal processing logic 165 of 3G AP 130 may alternatively be arranged to construct a Cell Broadcast Service (CBS) message comprising the information intended for receipt by at least one neighbouring network element. In a similar manner as for a system information message, the information may be located within an information element of the CBS message, which may then be broadcast within a CTCH block.

As will be appreciated by a skilled artisan, and in the same way as for system information elements, by broadcasting the information intended for receipt by at least one neighbouring network element within a BMC message, only slight modifications are required to be made to network elements in order to implement embodiments of the invention.

It is envisaged that embodiments of the invention are not limited to a network element, such as 3G AP 130 or network element 152, as hereinbefore described. For example, network element 152 may comprise a 3G AP supporting a 3G femto cell as illustrated in FIG. 1, or alternatively may comprise a Node-B supporting a macro cell.

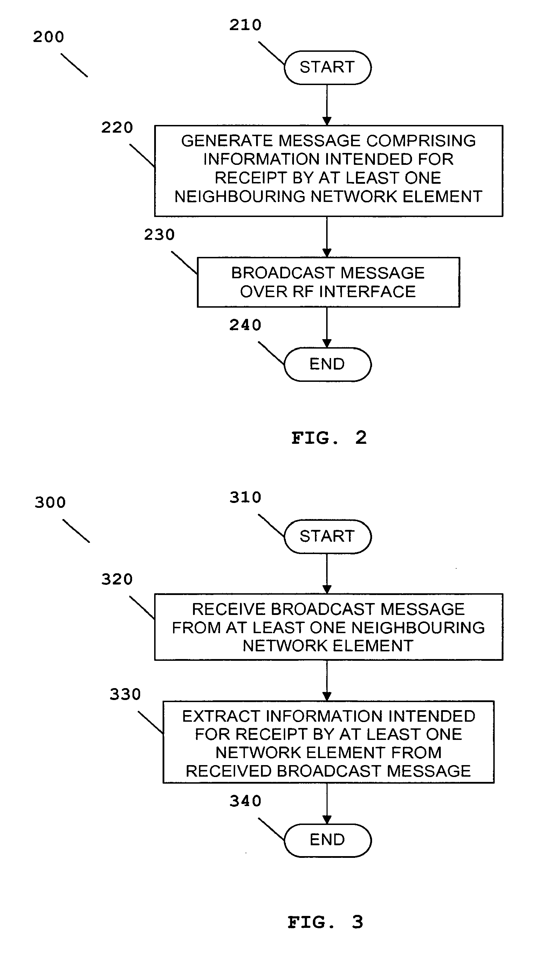

Referring now to FIG. 2, there is illustrated an example of a simplified flowchart 200 of a method for imparting information to at least one neighbouring network element within a cellular communication network according to some embodiments of the invention. For the illustrated embodiment, the method starts at step 210, and moves to step 220 with the generation of a message comprising information intended for receipt by at least one neighbouring network element. Next, in step 230, the message is broadcast over a radio frequency (RF) interface. The method then ends at step 240.

Referring now to FIG. 3, there is illustrated an example of a simplified flowchart 300 of a method for receiving information from at least one neighbouring network element within a cellular communication network according to some embodiments of the invention. For the illustrated embodiment, the method starts at step 310, and moves to step 320 with the receipt of a broadcast message from at least one neighbouring network element. Next, in step 330, information intended for receipt by at least one neighbouring network element of the broadcasting network element is extracted from the received broadcast message. The method then ends at step 340.

As previously mentioned, embodiments of the invention enable network elements to wirelessly impart information to neighbouring network elements. In particular, the network element may be able to provide information to neighbouring network elements without the need for pre-configuration of information for establishing a connection with the, or each, neighbouring network element. As a result, a Network Operator or owner of a network element may be substantially alleviated of the need to know or obtain such information relating to neighbouring network elements. Accordingly, the availability of such information, for example within a central configuration database or management system is substantially alleviated. Furthermore, the network element may be able to provide information to neighbouring network elements of neighbouring communication cells irrespective of whether or not the, or each, neighbouring network element may be within the same operator domain,

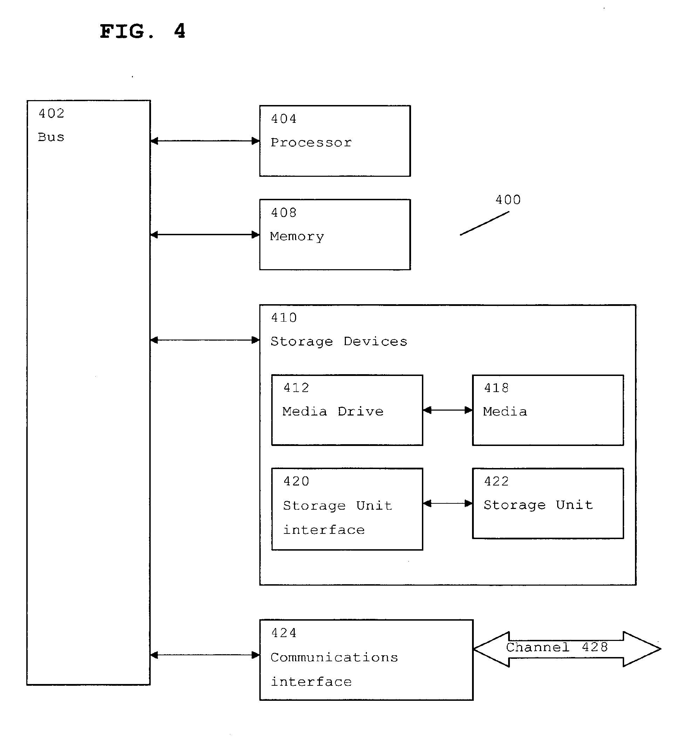

Referring now to FIG. 4, there is illustrated a typical computing system 400 that may be employed to implement signal processing functionality in embodiments of the invention. Computing systems of this type may be used in access points and wireless communication units. Those skilled in the relevant art will also recognize how to implement the invention using other computer systems or architectures. Computing system 400 may represent, for example, a desktop, laptop or notebook computer, hand-held computing device (PDA, cell phone, palmtop, etc.), mainframe, server, client, or any other type of special or general purpose computing device as may be desirable or appropriate for a given application or environment. Computing system 400 can include one or more processors, such as a processor 404. Processor 404 can be implemented using a general or special-purpose processing engine such as, for example, a microprocessor, microcontroller or other control logic. In this example, processor 404 is connected to a bus 402 or other communications medium.

Computing system 400 can also include a main memory 408, such as random access memory (RAM) or other dynamic memory, for storing information and instructions to be executed by processor 404. Main memory 408 also may be used for storing temporary variables or other intermediate information during execution of instructions to be executed by processor 404. Computing system 400 may likewise include a read only memory (ROM) or other static storage device coupled to bus 402 for storing static information and instructions for processor 404.

The computing system 400 may also include information storage system 410, which may include, for example, a media drive 412 and a removable storage interface 420. The media drive 412 may include a drive or other mechanism to support fixed or removable storage media, such as a hard disk drive, a floppy disk drive, a magnetic tape drive, an optical disk drive, a compact disc (CD) or digital video drive (DVD) read or write drive (R or RW), or other removable or fixed media drive. Storage media 418 may include, for example, a hard disk, floppy disk, magnetic tape, optical disk, CD or DVD, or other fixed or removable medium that is read by and written to by media drive 412. As these examples illustrate, the storage media 418 may include a computer-readable storage medium having particular computer software or data stored therein.

In alternative embodiments, information storage system 410 may include other similar components for allowing computer programs or other instructions or data to be loaded into computing system 400. Such components may include, for example, a removable storage unit 422 and an interface 420, such as a program cartridge and cartridge interface, a removable memory (for example, a flash memory or other removable memory module) and memory slot, and other removable storage units 422 and interfaces 420 that allow software and data to be transferred from the removable storage unit 422 to computing system 400.

Computing system 400 can also include a communications interface 424. Communications interface 424 can be used to allow software and data to be transferred between computing system 400 and external devices. Examples of communications interface 424 can include a modem, a network interface (such as an Ethernet or other NIC card), a communications port (such as for example, a universal serial bus (USB) port), a PCMCIA slot and card, etc. Software and data transferred via communications interface 424 are in the form of signals which can be electronic, electromagnetic, and optical or other signals capable of being received by communications interface 424. These signals are provided to communications interface 424 via a channel 428. This channel 428 may carry signals and may be implemented using a wireless medium, wire or cable, fiber optics, or other communications medium. Some examples of a channel include a phone line, a cellular phone link, an RF link, a network interface, a local or wide area network, and other communications channels.

In this document, the terms 'computer program product' 'computer-readable medium' and the like may be used generally to refer to media such as, for example, memory 408, storage device 418, or storage unit 422. These and other forms of computer-readable media may store one or more instructions for use by processor 404, to cause the processor to perform specified operations. Such instructions, generally referred to as 'computer program code' (which may be grouped in the form of computer programs or other groupings), when executed, enable the computing system 400 to perform functions of embodiments of the present invention. Note that the code may directly cause the processor to perform specified operations, be compiled to do so, and/or be combined with other software, hardware, and/or firmware elements (e.g., libraries for performing standard functions) to do so.

In an embodiment where the elements are implemented using software, the software may be stored in a computer-readable medium and loaded into computing system 400 using, for example, removable storage unit 422, drive 412 or communications interface 424. The control logic (in this example, software instructions or computer program code), when executed by the processor 404, causes the processor 404 to perform the functions of the invention as described herein.

It will be appreciated that, for clarity purposes, the above description has described embodiments of the invention with reference to different functional elements and processors. However, it will be apparent that any suitable distribution of functionality between different functional elements or processors, for example with respect to the base station or controller, may be used without detracting from the invention. For example, it is envisaged that functionality illustrated to be performed by separate processors or controllers may be performed by the same processor or controller. Hence, references to specific functional units are only to be seen as references to suitable means for providing the described functionality, rather than indicative of a strict logical or physical structure or organization.

Aspects of the invention may be implemented in any suitable form including hardware, software, firmware or any combination of these. The invention may optionally be implemented, at least partly, as computer software running on one or more data processors and/or digital signal processors. Thus, the elements and components of an embodiment of the invention may be physically, functionally and logically implemented in any suitable way. Indeed, the functionality may be implemented in a single unit, in a plurality of units or as part of other functional units.

Although one embodiment of the invention describes an AP for UMTS network, it is envisaged that the inventive concept is not restricted to this embodiment.

Although the invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term 'comprising' does not exclude the presence of other elements or steps.

Moreover, an embodiment can be implemented as a computer-readable storage element having computer readable code stored thereon for programming a computer (e.g., comprising a signal processing device) to perform a method as described and claimed herein. Examples of such computer-readable storage elements include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

Furthermore, although individually listed, a plurality of means, elements or method steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather indicates that the feature is equally applicable to other claim categories, as appropriate.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an', 'first', 'second' etc. do not preclude a plurality.

Thus, a method and apparatus for imparting information to at least one neighbouring network element have been described, which substantially addresses at least some of the shortcomings of past and present cell location techniques and/or mechanisms.

In some examples, the broadcast information intended for receipt by at least one neighbouring network element may further comprise information relating to the geographical location of the broadcasting network element, for example information relating to longitudinal and latitudinal coordinates for the broadcasting network element.

In some examples, the broadcast information intended for receipt by at least one neighbouring network element may further comprise information allowing a cluster of adjacent cells to form a group.

In some examples, the broadcast information intended for receipt by at least one neighbouring network element further comprises a code received from a controller within the cellular communication network.

In some examples, the broadcast information intended for receipt by at least one neighbouring network element further comprises information relating to access control.

In some examples, the signal processing logic may be arranged to construct a system information block comprising the information intended for receipt by at least one neighbouring network element, and to broadcast the system information block within at least one system information message.

In some examples, the information intended for receipt by at least one neighbouring network element may be located within an information element of the system information block.

In some examples, the signal processing logic may be arranged to broadcast the at least one system information message on a Broadcast Control Channel (BCCH).

In some examples, the signal processing logic may be arranged to construct a Broadcast-Multicast Control (BMC) message comprising the information intended for receipt by at least one neighbouring network element, and to broadcast the BMC message, for example where the BMC message comprises a Cell Broadcast Service (CBS) message.

In some examples, the information intended for receipt by at least one neighbouring network element may be located within an information element of the BMC message, and the BMC message is broadcast within a Common Traffic Channel (CTCH) block.

In some examples, the network element may comprise a femto cell access point. In some examples, the cellular communication network may comprise a Universal Mobile Telecommunications System (UMTS™) network.

## Claims

1. A cellular communication network (100) comprising :
a first access point (130) for supporting communications in a first communication cell, wherein the first access point (130) includes first radio frequency RF transceiver circuitry (155) arranged to enable communication with one or more wireless subscriber communication units (114) located within the first communication cell;
and a second access point(152) for supporting communications in a neighbouring communication cell, wherein the second access point includes second radio frequency RF transceiver circuitry (172) arranged to enable communication with at least one wireless subscriber communication unit located within the neighbouring communication cell;
and **characterised in that**;
the first access point (130) includes first signal processing logic (165) operably coupled to the first RF transceiver circuitry (155), and arranged to generate a broadcast message (220) comprising information intended for receipt by the second access point, (152) and to wirelessly broadcast (230) the message via the transceiver circuitry (155); such that the broadcast information intended for receipt by the second access point (152) comprises information enabling the second access point (152) to establish a connection with the first access point (130),
and **in that** the second access point (152) includes second signal processing logic (162) operably coupled to the second RF transceiver circuitry (172) and arranged to receive the broadcast message (320) from the first access point (130) via the second RF transceiver circuitry, extract information (330) from the received broadcast message (320) ; and establish a connection, using the extracted information, with the first access point (130).

2. The cellular communication network (100) of claim 1 wherein the broadcast information intended for receipt by the second access point (152) comprises information relating to at least one from a group of:
(i) an Internet Protocol IP address for a controller of the broadcasting network element;
(ii) A Fully Qualified Domain Name, FQDN.

3. The cellular communication network (100) of either preceding claim wherein the broadcast information further comprises information facilitating interference minimisation.

4. The cellular communication network (100) of claim 3 wherein the broadcast information intended for receipt by the second access point comprises information relating to at least one from a group of:
(i) a Common Pilot Channel, CPICH power selection control algorithm being used for the communication cell;
(ii) a current power level for the communication cell;
(iii) interference experienced by the network element.

5. The cellular communication network (100) of Claim 1 wherein the second signal processing logic (162) is further arranged to receive a broadcast message from the first access point (130), extract information from the received broadcast message and to configure power settings to complement those of the first access point (130) from which the broadcast message was received, based on the extracted information.

6. The cellular communication network (100) of claim 1 wherein the second signal processing logic (162) is further arranged to receive a broadcast message from the first access point (130), extract information from the received broadcast message and to determine or validate an at least approximate geographical location of the second access point (152) based on the extracted information.

7. The cellular communication network (100) of claim 1 wherein the second signal processing logic (162) is further arranged to receive a broadcast message from the first access point (130), extract information from the received broadcast message and to determine whether the first access point (130) from which the broadcast message was received is a member of the same group as itself.

8. The cellular communication network (100) of Claim 1 wherein the second signal processing logic (162) is further arranged, upon receipt of a request from a controller (142) within the cellular communication network, to receive a broadcast message from the first access point (130), extract a code from the received broadcast message, and to communicate the extracted code back to the controller within the cellular communication network (100).

9. The cellular communication network (100) of claim 1 wherein the second signal processing logic (162) is further arranged to receive a broadcast message from the first access point (130), extract information relating to access control from the received broadcast message and to restrict the handover of wireless communication devices to the first access point in accordance with the extracted information.

10. A method (200) for establishing a connection between a first access point (130) serving a first communication cell in a cellular communication network (100) and a second access point (152) serving a neighbouring cell in the cellular communication network, the method **characterised by**; at the first access point,
generating a broadcast message (220) comprising information intended for receipt by the second access point and broadcasting the message (230) over a radio frequency RF interface; and at the second access point,
receiving the broadcast message (320) from the first access point, extracting information (330) from the received broadcast message and establishing a connection, using the extracted information, with the first access point.

11. A computer-readable storage element having computer-readable code stored thereon for programming signal processing logic to perform a method according to claim 10.

## Patentansprüche

1. Zellulares Kommunikationsnetz (100), das Folgendes umfasst:
einen ersten Zugangspunkt (130) zum Unterstützen von Kommunikationen in einer ersten Kommunikationszelle, wobei der erste Zugangspunkt (130) erste Hochfrequenz-Sende/Empfangseinrichtungsschaltungen HF (155) umfasst, die eingerichtet sind, um die Kommunikation mit einer oder mehreren drahtlosen Teilnehmerkommunikationseinheiten (114) zu ermöglichen, die sich innerhalb der ersten Kommunikationszelle befinden;
und einen zweiten Zugangspunkt (152) zum Unterstützen von Kommunikationen in einer benachbarten Kommunikationszelle, wobei der zweite Zugangspunkt zweite Hochfrequenz-Sende/Empfangseinrichtungsschaltungen HF (172) umfasst, die eingerichtet sind, um die Kommunikation mit mindestens einer drahtlosen Teilnehmerkommunikationseinheit zu ermöglichen, die sich innerhalb der benachbarten Kommunikationszelle befindet;
und **dadurch gekennzeichnet, dass**:
der erste Zugangspunkt (130) erste Signalverarbeitungslogik (165) umfasst, die betriebsfähig an die ersten HF-Sende/Empfangseinrichtungsschaltungen (155) gekoppelt ist, und eingerichtet ist, um eine Broadcast-Nachricht (220) zu erzeugen, die Informationen umfasst, die zum Empfang durch den zweiten Zugangspunkt (152) bestimmt sind, und die Nachricht (230) drahtlos über die Sende/Empfangseinrichtungsschaltungen (155) rundzusenden;
derart, dass die Broadcast-Informationen, die für den Empfang durch den zweiten Zugangspunkt (152) bestimmt sind, Informationen umfassen, die es dem zweiten Zugangspunkt (152) ermöglichen, eine Verbindung mit dem ersten Zugangspunkt (130) herzustellen,
und dadurch, dass der zweite Zugangspunkt (152) zweite Signalverarbeitungslogik (162) umfasst, die betriebsfähig an die zweiten HF-Sende/Empfangseinrichtungsschaltungen (172) gekoppelt ist und eingerichtet ist, um die Broadcast-Nachricht (320) von dem ersten Zugangspunkt (130) über die zweiten HF-Sende/Empfangseinrichtungsschaltungen zu empfangen, Informationen (330) von der empfangenen Broadcast-Nachricht (320) zu extrahieren; und eine Verbindung unter Verwendung der extrahierten Informationen mit dem ersten Zugangspunkt (130) herzustellen.

2. Zellulares Kommunikationsnetz (100) nach Anspruch 1, wobei die Broadcast-Informationen, die für den Empfang durch den zweiten Zugangspunkt (152) bestimmt sind, Informationen umfassen, die mindestens eines von einer Gruppe von Folgendem betreffen:
(i) eine Internet-Protokoll-Adresse IP für eine Steuereinrichtung des rundsendenden Netzelements;
(ii) einen Fully Qualified Domain Name, FQDN.

3. Zellulares Kommunikationsnetz (100) nach einem der vorhergehenden Ansprüche, wobei die Broadcast-Informationen ferner Informationen umfassen, die die Störungsminimierung erleichtern.

4. Zellulares Kommunikationsnetz (100) nach Anspruch 3, wobei die Broadcast-Informationen, die für den Empfang durch den zweiten Zugangspunkt bestimmt sind, Informationen umfassen, die mindestens eines von einer Gruppe von Folgendem umfassen:
(i) einen Common Pilot Channel, CPICH, Leistungsauswahl-Steuerungsalgorithmus, der für die Kommunikationszelle verwendet wird;
(ii) einen gegenwärtigen Leistungspegel für die Kommunikationszelle;
(iii) Interferenz, die bei dem Netzelement auftritt.

5. Zellulares Kommunikationsnetz (100) nach Anspruch 1, wobei die zweite Signalverarbeitungslogik (162) ferner eingerichtet ist, um eine Broadcast-Nachricht von dem ersten Zugangspunkt (130) zu empfangen, Informationen von der empfangenen Broadcast-Nachricht zu extrahieren, und Leistungseinstellungen zu konfigurieren, um diejenigen des ersten Zugangspunkts (130), von dem die Broadcast-Nachricht empfangen wurde, auf der Grundlage der extrahierten Informationen zu ergänzen.

6. Zellulares Kommunikationsnetz (100) nach Anspruch 1, wobei die zweite Signalverarbeitungslogik (162) ferner eingerichtet ist, um eine Broadcast-Nachricht von dem ersten Zugangspunkt (130) zu empfangen, Informationen von der empfangenen Broadcast-Nachricht zu extrahieren und mindestens den ungefähren geographischen Standort des zweiten Zugangspunkts (152) auf der Grundlage der extrahierten Informationen zu bestimmen oder zu bestätigen.

7. Zellulares Kommunikationsnetz (100) nach Anspruch 1, wobei die zweite Signalverarbeitungslogik (162) ferner eingerichtet ist, um eine Broadcast-Nachricht von dem ersten Zugangspunkt (130) zu empfangen, Informationen von der empfangenen Broadcast-Nachricht zu extrahieren und zu bestimmen, ob der erste Zugangspunkt (130), von dem die Broadcast-Nachricht empfangen wurde, ein Mitglied derselben Gruppe ist, wie sie selbst.

8. Zellulares Kommunikationsnetz (100) nach Anspruch 1, wobei die zweite Signalverarbeitungslogik (162) ferner eingerichtet ist, um beim Empfang einer Anforderung von einer Steuereinrichtung (142) innerhalb des zellularen Kommunikationsnetzes eine Broadcast-Nachricht von dem ersten Zugangspunkt (130) zu empfangen, einen Code von der empfangenen Broadcast-Nachricht zu extrahieren und den extrahierten Code zurück an die Steuereinrichtung innerhalb des zellularen Kommunikationsnetzes (100) zu kommunizieren.

9. Zellulares Kommunikationsnetz (100) nach Anspruch 1, wobei die zweite Signalverarbeitungslogik (162) ferner eingerichtet ist, um eine Broadcast-Nachricht von dem ersten Zugangspunkt (130) zu empfangen, Informationen, die die Zugangssteuerung betreffen, von der empfangenen Broadcast-Nachricht zu extrahieren und den Handover von drahtlosen Kommunikationsvorrichtungen an den ersten Zugangspunkt gemäß den extrahierten Informationen einzuschränken.

10. Verfahren (200) zum Herstellen einer Verbindung zwischen einem ersten Zugangspunkt (130), der eine erste Kommunikationszelle in einem zellularen Kommunikationsnetz (100) bedient, und einem zweiten Zugangspunkt (152), der eine benachbarte Zelle in dem zellularen Kommunikationsnetz bedient, wobei das Verfahren durch Folgendes gekennzeichnet ist; am ersten Zugangspunkt:
Erzeugen einer Broadcast-Nachricht (220), die Informationen umfasst, die für den Empfang durch den zweiten Zugangspunkt bestimmt sind, und Rundsenden der Nachricht (230) über eine Hochfrequenz-Schnittstelle, HF;
und am zweiten Zugangspunkt:
Empfangen der Broadcast-Nachricht (320) von dem ersten Zugangspunkt, Extrahieren von Informationen (330) von der empfangenen Broadcast-Nachricht und Herstellen einer Verbindung mit dem ersten Zugangspunkt unter Verwendung der extrahierten Informationen.

11. Maschinenlesbares Speicherelement, das darauf gespeicherten maschinenlesbaren Code zum Programmieren von Signalverarbeitungslogik zum Durchführen eines Verfahrens nach Anspruch 10 aufweist.

## Revendications

1. Réseau de communication cellulaire (100) comprenant :
un premier point d'accès (130) pour supporter des communications dans une première cellule de communication, où le premier point d'accès (130) inclut un premier ensemble de circuits d'émetteur-récepteur radiofréquence RF (155) agencé pour permettre la communication avec une ou plusieurs unités de communication d'abonné sans fil (114) localisées à l'intérieur de la première cellule de communication ;
et un second point d'accès (152) pour supporter des communications dans une cellule de communication voisine, où le second point d'accès inclut un second ensemble de circuits d'émetteur-récepteur radiofréquence RF (172) agencé pour permettre la communication avec au moins une unité de communication d'abonné sans fil localisée à l'intérieur de la cellule de communication voisine ;
et **caractérisé en ce que** :
le premier point d'accès (130) inclut une première logique de traitement de signal (165) couplée fonctionnellement au premier ensemble de circuits d'émetteur-récepteur RF (155), et agencée pour générer un message de diffusion (220) comprenant des informations destinées à la réception par le second point d'accès (152) et pour diffuser de manière sans fil (230) le message via l'ensemble de circuits d'émetteur-récepteur (155) ; de sorte que les informations de diffusion destinées à la réception par le second point d'accès (152) comprennent des informations permettant au second point d'accès (152) d'établir une connexion avec le premier point d'accès (130),
et **en ce que** le second point d'accès (152) inclut une seconde logique de traitement de signal (162) couplée fonctionnellement au second ensemble de circuits d'émetteur-récepteur RF (172) et agencée pour recevoir le message de diffusion (320) en provenance du premier point d'accès (130) via le second ensemble de circuits d'émetteur-récepteur RF, extraire des informations (330) du message de diffusion reçu (320) ; et établir une connexion, en utilisant les informations extraites, avec le premier point d'accès (130).

2. Réseau de communication cellulaire (100) selon la revendication 1, dans lequel les informations de diffusion destinées à la réception par le second point d'accès (152) comprennent des informations relatives à au moins un parmi un groupe de :
(i) une adresse de Protocole Internet IP pour un contrôleur de l'élément de réseau de diffusion ;
(ii) un Nom de domaine complètement qualifié, FQDN.

3. Réseau de communication cellulaire (100) selon l'une ou l'autre des revendications précédentes, dans lequel les informations de diffusion comprennent en outre des informations facilitant la minimisation d'interférence.

4. Réseau de communication cellulaire (100) selon la revendication 3, dans lequel les informations de diffusion destinées à la réception par le second point d'accès comprennent des informations relatives à au moins un parmi un groupe de :
(i) un algorithme de commande de sélection de puissance de Canal pilote commun, CPICH, qui est utilisé pour la cellule de communication ;
(ii) un niveau de puissance actuel pour la cellule de communication ;
(iii) l'interférence subie par l'élément de réseau.

5. Réseau de communication cellulaire (100) selon la revendication 1, dans lequel la seconde logique de traitement de signal (162) est en outre agencée pour recevoir un message de diffusion en provenance du premier point d'accès (130), extraire des informations du message de diffusion reçu et configurer des réglages de puissance pour compléter ceux du premier point d'accès (130) en provenance duquel le message de diffusion a été reçu, sur la base des informations extraites.

6. Réseau de communication cellulaire (100) selon la revendication 1, dans lequel la seconde logique de traitement de signal (162) est en outre agencée pour recevoir un message de diffusion en provenance du premier point d'accès (130), extraire des informations du message de diffusion reçu et déterminer ou valider au moins une localisation géographique approximative du second point d'accès (152) sur la base des informations extraites.

7. Réseau de communication cellulaire (100) selon la revendication 1, dans lequel la seconde logique de traitement de signal (162) est en outre agencée pour recevoir un message de diffusion en provenance du premier point d'accès (130), extraire des informations du message de diffusion reçu et déterminer si le premier point d'accès (130) en provenance duquel le message de diffusion a été reçu est un membre du même groupe qu'elle-même.

8. Réseau de communication cellulaire (100) selon la revendication 1, dans lequel la seconde logique de traitement de signal (162) est en outre agencée, lors de la réception d'une demande en provenance d'un contrôleur (142) à l'intérieur du réseau de communication cellulaire, pour recevoir un message de diffusion en provenance du premier point d'accès (130), extraire un code du message de diffusion reçu, et communiquer le code extrait en retour au contrôleur à l'intérieur du réseau de communication cellulaire (100).

9. Réseau de communication cellulaire (100) selon la revendication 1, dans lequel la seconde logique de traitement de signal (162) est en outre agencée pour recevoir un message de diffusion en provenance du premier point d'accès (130), extraire des informations relatives au contrôle d'accès du message de diffusion reçu et restreindre le transfert de dispositifs de communication sans fil vers le premier point d'accès conformément aux informations extraites.

10. Procédé (200) pour établir une connexion entre un premier point d'accès (130) desservant une première cellule de communication dans un réseau de communication cellulaire (100) et un second point d'accès (152) desservant une cellule voisine dans le réseau de communication cellulaire, le procédé **caractérisé par** ; au niveau du premier point d'accès,
la génération d'un message de diffusion (220) comprenant des informations destinées à la réception par le second point d'accès et la diffusion du message (230) sur une interface radiofréquence RF ;
et au niveau du second point d'accès,
la réception du message de diffusion (320) en provenance du premier point d'accès, l'extraction d'informations (330) du message de diffusion reçu, et l'établissement d'une connexion, en utilisant les informations extraites, avec le premier point d' accès .

11. Elément de stockage lisible par ordinateur ayant un code lisible par ordinateur stocké sur celui-ci pour programmer une logique de traitement de signal pour exécuter un procédé selon la revendication 10.
